# EUROPEAN PATENT APPLICATION

(11) **EP 3 422 484 A1**
(43) Date of publication of application: **02.01.2019**
(21) Application number: 17178518.1
(22) Date of filing: 28.06.2017
(51) Int. Cl.: H01R 13/46, H01R 13/641, H04Q 1/02, H04R 1/02, H04R 3/00, H04R 29/00, H04N 5/44, H01R 13/52, H01R 13/639

(54) **ELECTRONIC DEVICE AND METHOD OF CONNECTING A CABLE TO AN ELECTRONIC DEVICE**

(71) Applicant: Vestel Elektronik Sanayi ve Ticaret A.S., 45030 Manisa (TR)
(72) Inventor: SARIARSLAN,, Muhammet Kürsat, 45030 Manisa (TR)
(74) Representative: Flint, Adam

(57) **Abstract**

An electronic device (20) has at least a first socket (12) for receiving a connector of a cable that carries a first type of signal and at least a second socket (12) for receiving a connector of a cable that carries a second type of signal which is different from the first type of signal. First and second indicators (22) are provided for indicating the first and second sockets (12). The device (20) has an electrically conductive input region (16) against which a cable connector may be touched. When a cable connector of a cable that in use carries a first type of signal is touched against the input region (16), the first indicator (22) is activated to indicate the first socket (12), and when a cable connector of a cable that in use carries a second type of signal is touched against the input region (16), the second indicator (22) is activated to indicate the second socket (12).

## Description

### Technical Field

The present disclosure relates to an electronic device and a method of connecting a cable to an electronic device.

### Background

Many electronic devices have a number of sockets to which cables may be connected. Some sockets are very different from each other. Other sockets may be similar or even identical to each other and yet may be intended to carry different types of signal. It is important to ensure that a cable is connected to the correct socket. This can however be a difficult or confusing task for users.

### Summary

According to a first aspect disclosed herein, there is provided an electronic device, the device comprising:
at least a first socket for receiving a connector of a cable that in use carries a first type of signal;
a first indicator for indicating the first socket;
at least a second socket for receiving a connector of a cable that in use carries a second type of signal which is different from the first type of signal;
a second indicator for indicating the second socket; and
an electrically conductive input region against which a cable connector may be touched;
the arrangement being such that when a cable connector of a cable that in use carries a first type of signal is touched against the input region, the first indicator is activated to indicate the first socket, and such that when a cable connector of a cable that in use carries a second type of signal is touched against the input region, the second indicator is activated to indicate the second socket.

In an example, at least one of the indicators comprises a visual indicator. This may be for example a light source in the region of the corresponding socket.

In an example:
the first indicator comprises a first cover which can be closed to prevent access to the first socket and which can be opened to allow access to the first socket; and
the second indicator comprises a second cover which can be closed to prevent access to the second socket and which can be opened to allow access to the second socket;
the arrangement being such that when a cable connector of a cable that carries a first type of signal is touched against the input region, the first cover is opened to allow access to the first socket, and such that when a cable connector of a cable that carries a second type of signal is touched against the input region, the second cover is opened to allow access to the second socket.

In an example, each cover is normally closed when no cable connector is connected to the corresponding socket.

In an example, the device comprises an electromagnet associated with each socket and a permanent magnet associated with each cover, wherein the electromagnet is operable so that the electromagnet and the permanent magnet repel each other thereby to drive the cover to the open position.

In an example, the device comprises circuitry connected to the input region, the circuitry being constructed and arranged to receive an identifier signal carried by a cable when the cable connector of the cable is touched against the input region, in which the identifier signal identifies the type of signal that is carried by the cable, and to activate the indicator of the corresponding socket accordingly.

In an example, the circuitry comprises a respective band pass filter for each socket, each band pass filter having a band pass frequency that corresponds to the frequency of an identifier signal that identifies the type of signal and that is carried by the cable that is intended to be connected to the corresponding socket. Other identifiers and corresponding circuitry may be used.

According to a second aspect disclosed herein, there is provided a method of connecting a cable having a cable connector to an electronic device, the device comprising at least a first socket for receiving a connector of a cable that in use carries a first type of signal, at least a second socket for receiving a connector of a cable that in use carries a second type of signal which is different from the first type of signal, and an electrically conductive input region against which a cable connector may be touched, the method comprising:
touching the connector of the cable against the electrically conductive input region of the electronic device;
the touching of the connector against the electrically conductive input region of the electronic device causing an indication to be given of the socket to which the cable should be connected; and
connecting the cable connecter to the indicated socket.

### Brief Description of the Drawings

To assist understanding of the present disclosure and to show how embodiments may be put into effect, reference is made by way of example to the accompanying drawings in which:
Figure 1 shows schematically a first example of an electronic device;
Figure 2 shows schematically a second example of an electronic device;
Figure 3 shows schematically an example of a socket and cover of the second example of an electronic device; and
Figure 4 shows schematically an example of circuitry of the second example of an electronic device.

### Detailed Description

As mentioned, many electronic devices have a number of sockets to which cables may be connected and it is important to ensure that a cable is connected to the correct socket. This can however be a difficult or confusing task for users.

To illustrate this, many consumer and other electronic devices will have sockets for receiving or outputting video and audio signals. These sockets and the corresponding connectors on the cables may be of the same type, even though some cables may be for carrying video and some may be for carrying audio. Moreover, even if the cable is intended to be carrying video say, the video may conform to a particular standard and there will be different sockets on the device corresponding to the different standards. Similar problems arise for audio signals. Furthermore, within say a particular video standard, a number of cables may need to be connected to carry different channels (e.g. colours) of the video signal. Likewise, for an audio signal, there may be different cables for left and right in say a stereo set-up, or for front left, front right, rear left, rear right, centre and subwoofer in a so-called 5.1 system, etc., etc. Despite the fact that the cables are intended in use to carry different types of signals, it is common for the cable connectors and therefore the sockets on the device to be similar and even identical. A common type of connector and socket is the RCA or phono connector and socket, which is used for many different types of cable.

As a specific example, again to illustrate this, a television set may have separate sockets for Y, Pb, Pr (that is, three separate sockets for component video signals), R, G, B (that is, three separate sockets for RGB video signals), audio in left, audio in right, CVBS (Composite Video Blanking & Sync) in, CVBS audio in right, CVBS audio in left, audio out left, audio out right, subwoofer out, SPDIF (Sony/Philips Digital Interface Format) out, back audio video in / out, etc. These sockets are often similar in appearance. Indeed, these sockets are often RCA or phono sockets.

It can be difficult and confusing for users to identify the correct socket when the user is attempting to connect a cable to the device.

To solve this, in outline, an electronic device as described herein has an electrically conductive input region against which a cable connector may be touched. When a user needs to connect a particular cable to a particular socket on the electronic device, the user touches the cable connector of the cable against the input region. This causes an indicator associated with the corresponding socket to be activated, so that the user knows to which socket the cable should be connected. The user can then connect the cable to that socket.

In an example, the device has circuitry which is connected to the input region. In use, when a cable connector is touched against the input region, an identifier signal carried by the cable is passed to the circuitry. The identifier signal identifies the type of signal that is carried by the cable. This enables the circuitry to cause activation of the indicator of the corresponding socket. In an example, the identifier signal is generated or produced by the device or apparatus, etc., to which the other end of the cable is connected and to which a connection with the electronic device is to be made.

The electronic device may be of many different types, including for example a television set, a DVD player, a set-top box, a personal computer, an audio amplifier, an audio processor, including for example a surround sound audio processor/amplifier, a games console, etc.

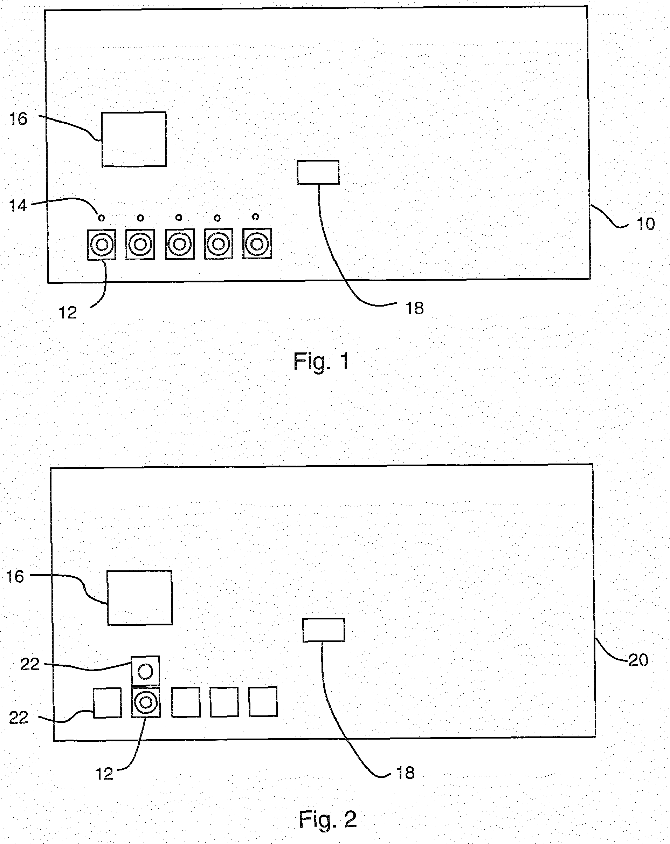

Referring now to Figure 1, there is shown schematically a portion of a first example of an electronic device 10. The portion shown may be a rear panel or some other portion to which cables may be connected.

The device 10 has at least two sockets 12 each for receiving a connector of a cable. Five sockets 12 are shown in the figure, but as is well known and described above, there may be more or fewer sockets. Some or all of the sockets 12 may be of the same type. Some or all of the sockets 12 may be for example RCA or phono sockets, though they may be of other types.

Each socket 12 is typically for carrying a specific signal and no other signal. For example, in the case that the device 10 is a television set, and as outlined above, there may be three sockets for respectively carrying the Y, Pb, Pr signals of a composite video signal, which might be received from for example a DVD player or set-top box, etc.; there may be separate sockets for left and right audio in, for receiving audio from for example a DVD player or set-top box, etc.; there may be separate sockets for left and right audio out, or for the separate audio signals for a 5.1 or 7.1 audio, which are intended to be passed to corresponding loudspeakers; there may be a socket for an SPDIF connection, for passing for example a digital 5.1 audio signal to a surround sound processor/amplifier; etc., etc. It is of course important that cables to or from particular devices or apparatus are connected to the correct sockets on the device 10.

At least one socket 12 is provided with an indicator 14. In this example, each socket 12 is provided with an indicator 14. In the example of Figure 1, the indicator 14 is a light source for emitting light, which may be for example a small light bulb, LED, etc. Each indicator 14 is located close to its corresponding socket 12. The indicator 14 can be caused to illuminate in order to indicate the socket 12.

The device 10 has an electrically conductive input region 16. This may be in the form of a metal panel or the like. The input region 16 is positioned and located so that a user can touch a cable connector against the input region 16. A convenient location is on the outside of the device 10 and close to the portion of the device 10 where the sockets 12 are located. The input region 16 is in communication with circuitry 18. The circuitry 18 is also connected to the/or each indicator 14.

The circuitry 18 is arranged to receive an identifier signal carried by a cable when the cable connector of the cable is touched against the input region 16. Examples of identifier signals will be discussed further below. The identifier signal provides an indication of the type of signal that is to be carried by the cable in normal use once properly connected to the device 10. For example, the identifier signal may identify that the cable is intended to be an input signal for a particular one of the Y, Pb, Pr signals of a composite video signal, one of the left or right audio out signals, etc. When the connector of the cable is touched against the input region 16, the identifier signal passes to the circuitry 18, which then causes the indicator 14 of the corresponding socket 12 to be activated. In this example, where the indicator 14 is a visual indicator such as a light source or the like, the visual indicator 14 for that socket 12 is caused to illuminate. The user can therefore quickly identify the correct socket 12 to which the cable should be connected. As a practical matter, the cable connector should be touched against the input region 16 so that it is the live and not the ground pin or the like of the connector which is touched against the input region 16. For example, in the case of the connector being a RCA or phono connector, the centre pin of the cable connector should be touched against the input region 16.

Referring now to Figure 2, there is shown schematically a portion of a second example of an electronic device 20. Again, the portion shown may be a rear panel or some other portion to which cables may be connected.

Similarly to the first example, the electronic device 20 of Figure 2 has at least two sockets 12 for receiving a connector of a cable. Some or all of the sockets 12 may be of the same type. Some or all of the sockets 12 may be for example RCA or phono, though they may be of other types. The sockets 12 may each typically be for carrying a specific signal and no other signal, similarly to the example of Figure 1 described above.

In the example of Figure 2, the indicator for at least some of the sockets 12 is in the form of a closable door or cover 22. Each socket 12 may be provided with such a closable cover 22. Moreover, some or all of the sockets 12 may alternatively or additionally have a visual indicator 14 of the type described above.

A cover 22 can be closed to prevent access to its socket 12 and opened to allow access to its socket 12. Different arrangements for the cover 22 are possible. For example, the cover 22 may be biased towards its closed position, such as by for example a spring mechanism, a magnetic arrangement, gravity, etc. In this case, the cover 22 is driven open against the bias when access to the socket 12 is required. Alternatively, the cover 22 may be biased to the open position, for example, again by a spring mechanism, a magnetic arrangement, gravity etc., and be driven closed against the bias when access to the socket 12 is not required.

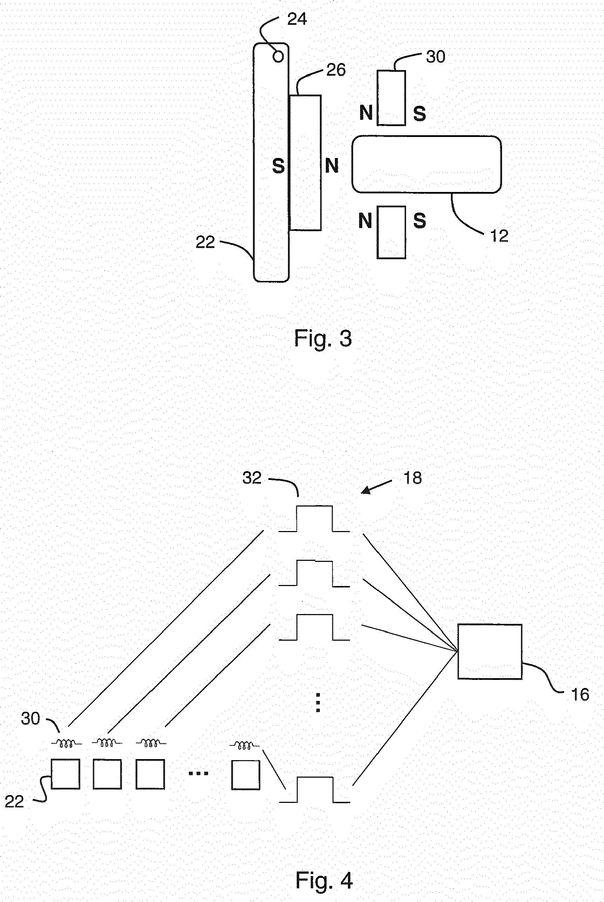

An example of a specific arrangement for the cover 22 is shown in more detail in Figure 3. The cover 22 has a hinge 24 so that the cover is hingedly connected to the device 20. In this example, the hinge 24 is located towards the upper edge of the cover 22 so that, in its rest position, the cover 22 is biased by gravity to cover the socket 12. Alternatively or additionally, a spring arrangement or the like may bias the cover 22 to its closed position.

The cover 22 in this example has a permanent magnet 26 located on its innermost face 28 which faces the socket 12. A coil of an electromagnet 30 is located on the device 20 in the region of the socket 12. In this example, the coil of the electromagnet 30 surrounds the socket 12. The permanent magnet 26 and the electromagnet 30 are arranged so that like poles (in example shown, the North poles) face each other when the electromagnet 30 is energised. Accordingly, when the electromagnet 30 is energised, the cover 22 is driven away from the socket 12, which enables access to the socket 12. Accordingly, when access to the socket 12 is required, in this example the electromagnet 30 of the socket 12 is energised to drive open the corresponding cover 22. Likewise, when access to the socket 12 is not required, the electromagnet 30 is de-energised, which allows the cover 22 to close. The use of such a cover 22 not only provides an indicator to the user as to the socket 12 to which the cable should be connected, but it also prevents inadvertent access to the incorrect socket 12 as the covers 22 for the incorrect sockets 12 will normally be closed so as to cover those sockets 12.

As mentioned above, when a connector of a particular cable is touched against the input region 16 an identifier signal is passed from the cable through the input region 16 to the circuitry 18. The identifier signal identifies the type of signal that the cable is intended to carry in use, including any of the various different types of signals mentioned above. The identifier signal may be generated by the device or apparatus which is being connected via the cable to the electronic device 10, 20. This may require some modification of such devices or apparatus (which, as mentioned, may be one of many different types, including DVD players, set-top boxes, audio processors, loudspeakers, which may be for example active speakers, games consoles, etc.). The identifier may be one of a number of different types. For example, in a sophisticated system, the identifier may be in the form of a series of bits that identify the device or apparatus which is to be connected to the electronic device. 10, 20. In such a case, the circuitry 18 can decode the bits to identify the device or apparatus and in particular the type of signal that the cable is to carry for that device or apparatus.

A more simple version is shown schematically in Figure 4. In particular, in this example, the signal that identifies the type of signal that is to be carried by the cable in use may in effect be a simple sine wave, having different frequencies for different devices or apparatus, and different frequencies for different signals for the device or apparatus as necessary. Thus, by way of illustration, the Y signal of a composite video signal may be identified by an identifier signal that has a first frequency, the Pb signal of a composite video signal may be identified by an identifier signal that has a different frequency, etc., etc.

In this case, as illustrated schematically in Figure 4, the identifier circuitry 18 may have a series of band pass filters 32 arranged in parallel and which are all connected to the input region 16. Each band pass filter 32 has a specific band pass frequency so as to be able to pass only an identifier signal having that frequency and that is received by the input region 16 when a cable connector is touched against the input region 16. Each band pass filter 32 is associated with a corresponding socket 12 (shown covered by covers 22 in Figure 4). Each band pass filter 32 is arranged to receive the identifier signal received at the input region 16 when a cable connector is touched against the input region. Accordingly, only the band pass filter 32 that has a band pass frequency corresponding to the frequency of the identifier signal received at the input region 16 passes that signal. In this example, that signal is passed to the electromagnet 30 of the corresponding socket 12 which therefore energises the electromagnet 30 to open the door 22 of that socket 12. On the other hand, the other band pass filters 32 do not pass the identifier signal and therefore the covers 22 of those other sockets 12 are not caused to open.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors and a digital signal processor or processors, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. An electronic device, the device comprising:
at least a first socket for receiving a connector of a cable that in use carries a first type of signal;
a first indicator for indicating the first socket;
at least a second socket for receiving a connector of a cable that in use carries a second type of signal which is different from the first type of signal;
a second indicator for indicating the second socket; and
an electrically conductive input region against which a cable connector may be touched;
the arrangement being such that when a cable connector of a cable that in use carries a first type of signal is touched against the input region, the first indicator is activated to indicate the first socket, and such that when a cable connector of a cable that in use carries a second type of signal is touched against the input region, the second indicator is activated to indicate the second socket.

2. A device according to claim 1, wherein at least one of the indicators comprises a visual indicator.

3. A device according to claim 1 or claim 2,
wherein the first indicator comprises a first cover which can be closed to prevent access to the first socket and which can be opened to allow access to the first socket; and
wherein the second indicator comprises a second cover which can be closed to prevent access to the second socket and which can be opened to allow access to the second socket;
the arrangement being such that when a cable connector of a cable that carries a first type of signal is touched against the input region, the first cover is opened to allow access to the first socket, and such that when a cable connector of a cable that carries a second type of signal is touched against the input region, the second cover is opened to allow access to the second socket.

4. A device according to claim 3, wherein each cover is normally closed when no cable connector is connected to the corresponding socket.

5. A device according to claim 3 or claim 4, comprising an electromagnet associated with each socket and a permanent magnet associated with each cover, wherein the electromagnet is operable so that the electromagnet and the permanent magnet repel each other thereby to drive the cover to the open position.

6. A device according to any of claims 1 to 5, comprising circuitry connected to the input region, the circuitry being constructed and arranged to receive an identifier signal carried by a cable when the cable connector of the cable is touched against the input region, in which the identifier signal identifies the type of signal that is carried by the cable, and to activate the indicator of the corresponding socket accordingly.

7. A device according to claim 6, wherein the circuitry comprises a respective band pass filter for each socket, each band pass filter having a band pass frequency that corresponds to the frequency of an identifier signal that identifies the type of signal and that is carried by the cable that is intended to be connected to the corresponding socket.

8. A method of connecting a cable having a cable connector to an electronic device, the device comprising at least a first socket for receiving a connector of a cable that in use carries a first type of signal, at least a second socket for receiving a connector of a cable that in use carries a second type of signal which is different from the first type of signal, and an electrically conductive input region against which a cable connector may be touched, the method comprising:
touching the connector of the cable against the electrically conductive input region of the electronic device;
the touching of the connector against the electrically conductive input region of the electronic device causing an indication to be given of the socket to which the cable should be connected; and
connecting the cable connecter to the indicated socket.

9. A method according to claim 8, wherein at least one of the indicators comprises a visual indicator.

10. A method according to claim 9 or claim 10, wherein the first indicator comprises a first cover which can be closed to prevent access to the first socket and which can be opened to allow access to the first socket, and the second indicator comprises a second cover which can be closed to prevent access to the second socket and which can be opened to allow access to the second socket, and wherein:
when a cable connector of a cable that carries a first type of signal is touched against the input region, the first cover is opened to allow access to the first socket, and when a cable connector of a cable that carries a second type of signal is touched against the input region, the second cover is opened to allow access to the second socket.

11. A method according to claim 10, wherein each cover is normally closed when no cable connector is connected to the corresponding socket.

12. A method according to claim 10 or claim 11, wherein the device comprises an electromagnet associated with each socket and a permanent magnet associated with each cover, the method comprising operating the electromagnet so that the electromagnet and the permanent magnet repel each other thereby to drive the cover to the open position.
